# EUROPÄISCHE PATENTSCHRIFT

(11) **EP 0 880 013 B1**
(45) Veröffentlichungstag und Bekanntmachung des Hinweises auf die Patenterteilung: **09.04.2003**
(21) Anmeldenummer: 98106467.8
(22) Anmeldetag: 08.04.1998
(51) Int. Cl.: G01D 5/16, G01P 3/487, G05B 19/23

(54) **Verfahren zum Betreiben eines Lagesensors**
Operating method for a positioning sensor
Procédé de fonctionnement pour un capteur de position

(30) Priorität: 21.05.1997 DE 19721152; 14.02.1998 DE 19806099
(43) Veröffentlichungstag der Anmeldung: 25.11.1998
(73) Patentinhaber: ROBERT BOSCH GMBH, 70442 Stuttgart (DE)
(72) Erfinder: Lamm, Hubert, 77876 Kappelrodeck (DE); Haderer, Guenter, 77815 Buehl (DE)

(56) Entgegenhaltungen:
- DE-A- 4 229 610
- DE-A- 4 232 950
- DE-C- 4 407 474
- FR-A- 2 703 450
- US-A- 4 313 114
- US-A- 4 567 416
- US-A- 4 672 279
- US-A- 5 131 017

## Beschreibung

### Stand der Technik

Aus der DE-OS 42 32 950 ist eine Vorrichtung zur Lageregelung eines bewegbaren Teils mit einer elektromotorischen Antriebseinheit bekannt, die durch eine signalverarbeitende Anordnung gesteuert wird. In der Antriebseinheit ist ein inkrementeller Lagesensor zur Bestimmung der Ist-Position des bewegbaren Teils angeordnet. Der inkrementelle Lagesensor besteht aus einem auf einer Motorankerwelle angeordneten Magnetrad mit mehreren unterschiedlich magnetisierten Segmenten sowie gestellfest angeordneten Magnetfeldsensoren als Signalaufnehmern, die die am jeweiligen Ort des Magnetfeldsensors vorherrschende Magnetisierung in Nord- oder Südrichtung in Signale mit zwei unterschiedlichen Pegeln umwandeln. Zwischen zwei Pegelwechseln eines der Magnetfeldsensoren findet eine Relativbewegung des Magnetrades zum Magnetfeldsensor in der Größe eines Segmentes statt. Durch Zählung der unterschiedlichen aufeinanderfolgenden Pegel und Inkrementierung oder Dekrementierung des Zählers abhängig von der Drehrichtung der Motorankerwelle wird die Ist-Position des Stellteils relativ zu einer Kalibrierposition ermittelt.

Wird die Energieversorgung der Magnetfeldsensoren etwa aus Gründen der Energieeinsparung abgeschaltet, wenn die Motorankerwelle ruht, können Fehlzählungen auftreten. Dadurch wird die inkrementelle Bestimmung der Stellteil-Istposition fehlerhaft, so daß eine Rekalibrierung der Positionsermittlung erforderlich wird.

### Vorteile der Erfindung

Das Verfahren nach Anspruch 1 hat den Vorteil, daß Änderungen des Pegels auch bei dem Außerbetriebsetzen des Magnetfeldsensors, etwa durch Abschalten seiner Energieversorgung, korrekt erfaßt werden. Aufgrund einer bei vielen Magnetfeldsensoren auftretenden Schalthysterese entspricht der abgegebene Pegel bei sehr kleinen Komponenten der Magnetfeldstärke in der vom Magnetfeldsensor erfaßten Raumrichtung nach einem Vorzeichenwechsel nicht dem tatsächlichen Vorzeichen der Komponente, sondern bis zum Überschreiten einer spezifischen Feldstärkenschwelle dem inversen Vorzeichen, also dem Vorzeichen, das die Komponente vor dem Vorzeichenwechsel hatte.

Ein solcher Vorzeichenwechsel tritt ein, wenn sich ein Übergangsbereich (der einen Hysteresebereich bedingt) unterschiedlich magnetisierter Abschnitte des ersten Teils an dem Magnetfeldsensor vorbeibewegt. Wird die Relativbewegung des ersten Teils zum zweiten Teil in dem Hyteresebereich gestoppt und der Magnetfeldsensor außer Betrieb gesetzt, so wird unter Umständen vor dem Außerbetriebsetzen ein falscher Pegel abgegeben. Bei Wiederinbetriebnahme des Magnetfeldsensors fehlt der Hystereseeffekt, und der Pegel wird richtig, dem wahren Vorzeichen der Magnetfeldkomponente entsprechend, abgegeben. Aufgrund dieses Effektes bleibt ein magnetisierter Abschnitt des ersten Teils in der Erfassung durch den Magnetfeldsensor unberücksichtigt, und die aus der Erfassung abgeleiteten Größen sind fehlerbehaftet. Das erfindungsgemäße Verfahren ermöglicht es, derartige Schalthysteresen bei Außerbetriebsetzen des Magnefeldsensors zu detektieren. Bei der Auswertung der Pegel kann eine adäquate Reaktion darauf erfolgen, da ermittelt werden kann, ob der Pegelwechsel gültig ist, d.h. auf die Änderung des Magnetfeldes aufgrund der Bewegung des ersten Teils relativ zum zweiten Teil zurückzuführen ist.

Vorteilhafte Weiterbildungen und Ausgestaltungen ergeben sich aus den vom Anspruch 1 abhängigen Ansprüchen.

Wird ein gültiger Pegelwechsel bei einem Außerbetriebsetzen des wenigstens einen Magnetfeldsensors festgestellt, so wird vorteilhaft die durch die signalverarbeitende Anordnung bestimmte relative Lage des ersten zum zweiten Teil entsprechend dem Pegelwechsel korrigiert. Insbesondere bei inkrementeller Erfassung der Abschnitte, also relativ zu vorangegangenen Erfassungen, können sich die Fehlerfassungen durch Außerbetriebsetzen des Magnetfeldsensors in einem Hysteresebereich bei häufiger Abschaltung addieren und zu beträchtlichen Abweichungen bei der Lagebestimmung führen, was in der Regel nicht tolerabel ist. Durch die vorgeschlagene Korrektur kann der zusätzliche Aufwand einer fest installierten Absolutwert-Lagebestimmung unterbleiben.

Die Auswertung der Pegel des Magnetfeldsensors zur Lagebestimmung kann besonders einfach erfolgen, wenn die Wechsel der Pegel erfaßt und bei einem Pegelwechsel ein Zähler abhängig von der relativen Bewegungsrichtung des ersten zum zweiten Teil inkrementiert oder dekrementiert, d.h. um eins erhöht oder erniedrigt wird. Der Zähler repräsentiert dann die relative Position des bewegten Teils zu einer Ausgangsposition und kann für eine inkrementelle Lagebestimmung ausgewertet werden. Die Pegelwechsel können durch einen oder mehrere einfache digitale Zähler der signalverarbeitenden Anordnung, oder auch programmgesteuert gezählt werden.

Der Einsatz von zwei Magnetfeldsensoren, die das Magnetfeld des ersten Teils erfassen, bietet den Vorteil einer Redundanz der Lagebestimmung. Bei bestimmten geometrischen Konfigurationen der Abschnitte und der Magnetfeldsensoren ergibt sich darüber hinaus die Möglichkeit, daß die Bewegungsrichtung der beiden Teile zueinander durch Auswertung der Phasenverschiebung der Pegel der beiden Magnetfeldsensoren bestimmt wird.

Die Verwendung zweier Magnetfeldsensoren ermöglicht unter bestimmten Umständen auch auf einfache Weise die Erkennung von Fehlern bei der Bestimmung der relativen Lage der beiden Teile zueinander. Wenn die Abstände der Grenzen der magnetisierten Abschnitte nicht dem Abstand der beiden Magnetfeldsensoren entsprechen, und bei beiden Magnetfeldsensoren während des Außerbetriebsetzens ein Pegelwechsel aufgetreten ist, wird die bestimmte Lage der beiden Teile zueinander als ungültig angesehen. Dieser Fall kann unter den genannten Voraussetzungen nämlich nur dann auftreten, wenn eine Verstellung durch äußeren Eingriff erfolgt ist oder Fehler in der Auswertelogik aufgetreten sind. Da die Magnetfeldsensoren außer Betrieb waren, ist nicht mehr sichergestellt, daß die inkrementell ermittelte Lage die tatsächliche Lage der beiden Teile zueinander angibt. Als Reaktion kann eine Neukalibrierung der inkrementellen Lagebestimmung vorgesehen sein. Ist dagegen bei genau einem der beiden Magnetfeldsensoren ein Pegelwechsel aufgetreten, wird vorteilhaft eine Positionskorrektur entsprechend dem angenommenen gültigen Pegelwechsel vorgenommen. In diesem Fall ist mit hoher Wahrscheinlichkeit von einer Schalthysterese bei dem Magnetfeldsensor, dessen Pegel gewechselt hat, auszugehen.

Vorzugsweise findet das Verfahren Anwendung, wenn der Lagesensor in einer elektromotorischen Motor-Getriebe-Antriebseinheit, insbesondere zur Verstellung von Stellteilen in Kraftfahrzeugen wie Fenstern und Schiebe-Hebe-Dächern, angeordnet ist. Das erste Teil des Lagesensors ist als Magnetrad auf der Motorankerwelle drehfest befestigt, während das zweite Teil beispielsweise in Form einer Elektronikplatine mit einem Magnetfeldsensor gestellfest an einem Gehäuse der elektromotorischen Antriebseinheit angeordnet ist, und der Lagesensor die Rotation des Magnetrades und damit der Motorankerwelle relativ zum Stator des Motors bestimmt. Denkbar ist auch die stationäre Anordnung des ersten Teils als Magnetgeber an dem Gehäuse der Antriebseinheit und ein mit der Motorankerwelle rotierender Magnetfeldsensor. Insbesondere bei abgeschaltetem Stromgenerator müssen die Magnetfeldsensoren, die einen hohen Energieverbrauch haben, außer Betrieb gesetzt werden, um die Batterie des Kraftfahrzeugs zu schonen. Das Verfahren stellt in diesem Fall sicher, daß die Lagesensoren korrekt arbeiten.

Besonders vorteilhaft ist das Betreiben des Lagesensors gemäß dem erfindungsgemäßen Verfahren, wenn aus der Rotation der Motorankerwelle relativ zum Stator des Motors die Position des von der Antriebseinheit bewegten Stellteils ermittelt wird. Während bislang zur Rekalibrierung der Position Mikroschalter an Endanschlägen des Stellteils oder andere Mittel zur Absolutpositionsbestimmung vorgesehen waren, kann die Zahl von Fehlzählungen deutlich vermindert werden. Dadurch sind weniger Rekalibrierläufe erforderlich, und anstelle der Rekalibrierung durch Mikroschalter können andere, weniger aufwendig umzusetzende Verfahren zur Rekalibrierung angewendet werden. Denkbar ist etwa die Rekalibrierung durch Bewegung gegen einen Endanschlag und Erfassung des Motorstroms. Unter Umständen kann die Rekalibrierung auch ganz entfallen. Falls dennoch weiterhin Mikroschalter verwendet werden müssen, unterliegen diese geringerem Verschleiß und haben höhere Standzeiten. Außerdem wird der Bedienkomfort erhöht, da der Zeitaufwand für die Rekalibrierung deutlich gesenkt wird.

Ferner ist die Verwendung des erfindungsgemäßen Verfahrens günstig, wenn die Pegel zur Bestimmung der Geschwindigkeit und/oder Beschleunigung und/oder der Bewegungsrichtung der Bewegung des ersten und zweiten Teils relativ zueinander und/oder einer über das bewegte Teil übertragenen Kraft ausgewertet werden. Da Lageänderungen vom Lagesensor genauer erfaßt und diese Größen von den Lageänderungen der Teile zueinander abhängen, ist der Fehler bei ihrer Bestimmung kleiner.

Das erfindungsgemäße Verfahren ermöglicht in einer Weiterbildung eine sehr genaue Positionierung der Teile zueinander auf die Positionen, die durch die Hysteresebereiche zwischen den magnetisierten Abschnitten des ersten Teils vorgegeben sind, indem die Teile wiederholt um im Vergleich zur Größe der Hysteresebereiche kleine Schritte zueinander bewegt werden, der wenigstens eine Magnetfeldsensor außer Betrieb und nach einer vorgebbaren Zeitspanne wieder in Betrieb gesetzt wird, solange, bis der vor dem Außerbetriebsetzen gespeicherte Pegel des Magnetfeldsensors nicht mehr mit dem nach dem Wiederinbetriebsetzen abgegebenen Pegel übereinstimmt. In diesem Fall erfaßt der Magnetfeldsensor einen Hysteresebereich des ersten Teils. Bei n unterschiedlich magnetisierten Abschnitten auf einem rotierendem Magnetrad gibt es n Hysteresebereiche; bei Verwendung von m Magnetfeldsensoren können damit bis zu n*m Positionen mit hoher Genauigkeit, die die normale Auflösung des Lagesensors weit übersteigt, eingestellt werden. Während die Auflösung normalerweise nicht besser als die Größe eines magnetisierten Abschnittes ist, liegt sie hier in der Größenordnung des Hysteresebereiches, der in der Regel deutlich kleiner ist.

Die Bewegung der Teile zueinander um im Vergleich zur Größe der magnetisierten Abschnitte kleine Schritte kann beispielsweise durch sehr kurze Betriebsimpulse der die Teile antreibenden Vorrichtung bewirkt werden.

Eine Weiterbildung der Erfindung beruht auf der erfinderischen Erkenntnis, daß es bei dem Außerbetriebsetzen des wenigstens einen Magnetfeldsensors durch Abschaltung seiner Energieversorgung je nach Zustand der Sensorausgänge zu einem Pegelwechsel kommen kann, der jedoch nicht auf einem tatsächlichen Vorzeichenwechsel am Ort des Sensors beruht. Vielmehr ist dieser Pegelwechsel auf Schwingungen, ausgelöst durch die Abschaltung und kapazitive und induktive Widerstände der Ansteuerelektronik oder der Lagesensoren selbst zurückzuführen. Dieser Effekt tritt insbesondere auf, wenn die Magnetfeldsensoren, beispielsweise Hallsensoren, sogenannte Open-Kollektor-Ausgänge aufweisen. Erfindungsgemäß werden deshalb während eines Außerbetriebsetzens des Magnetfeldsensors bei Stillstand des ersten Teils zum zweiten Teil die Pegel, die der signalverarbeitenden Anordnung von dem Magnetfeldsensor zugeführt werden, als ungültig gewertet und beispielsweise in der inkrementellen Lagebestimmung nicht berücksichtigt. Damit ist sichergestellt, daß nur solche Pegelwechsel gezählt werden, die auf eine Bewegung des Magnetrades zurückgehen.

In einer günstigen Ausgestaltung des Verfahrens wird die signalverarbeitende Anordnung progammgesteuert betrieben. Bei einem Pegelwechsel wird der normale Programmbetrieb, der vorzugsweise durch einen Mikrocontroller in der signalverarbeitenden Anordnung ausgeführt wird und neben der Lagebestimmung diverse andere Aufgaben umfassen kann, unterbrochen und ein Unterbrechungs-Unterprogramm ausgeführt (Interrupt), in dem der Pegelwechsel ausgewertet wird. Nach Auswertung des Pegelwechsels wird der normale Programmbetrieb wieder aufgenommen. Durch die Trennung von normalem Programmbetrieb und Auswertung der Pegelwechsel im Unterbrechungs-Unterprogramm ist die Auswertung der gültigen Pegelwechsel sichergestellt; auch während der Bearbeitung komplexer Programmteile geht kein gültiger Pegelwechsel verloren. Darüber hinaus kann das erfindungsgemäße Verfahren leicht im Unterbrechungs-Unterprogramm implementiert werden.

Eine besonders einfache Ausführungsform dieses Verfahrens sieht vor, daß vor dem Außerbetriebsetzen des Magnetfeldsensors eine Kennung gesetzt wird, daß die Kennung nach dem Wiederinbetriebsetzen rückgesetzt wird, und daß ein Pegelwechsel bei gesetzter Kennung nicht ausgewertet wird. Das Unterbrechungs-Unterprogramm prüft, ob eine Kennung gesetzt ist, und berücksichtigt den Pegelwechsel abhängig davon, ob die Kennung gesetzt ist, als gültig oder ungültig. In letzterem Fall wird der Pegelwechsel nicht in einer inkrementellen Positionsbestimmung berücksichtigt.

Weitere vorteilhafte Ausgestaltungen des erfindungsgemäßen Verfahrens ergeben sich aus den weiteren Unteransprüchen und in Verbindung mit dem nachfolgenden Ausführungsbeispiel.

### Zeichnung

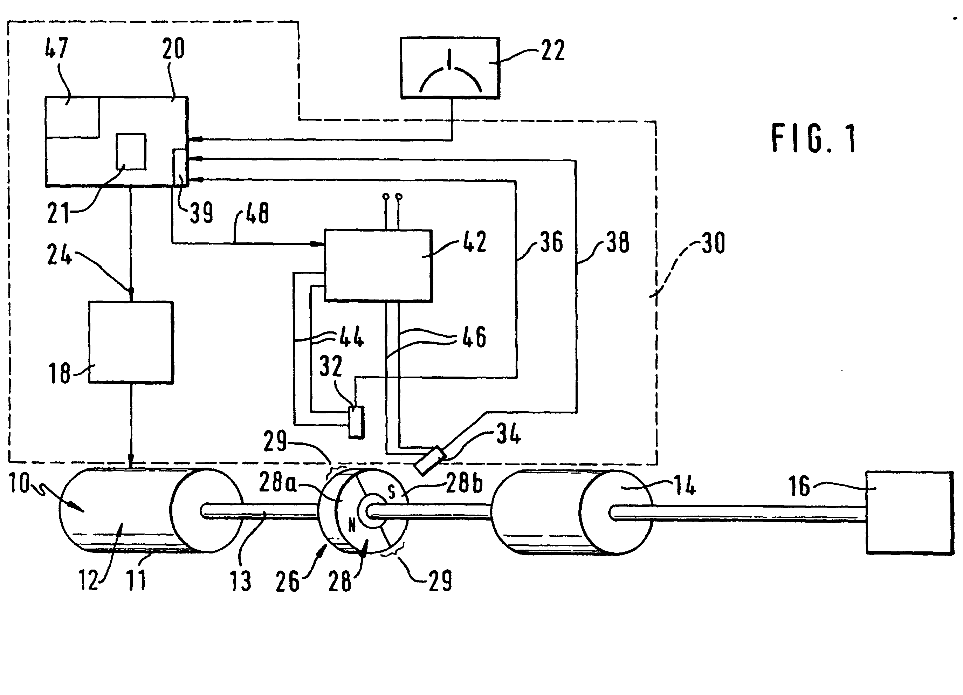

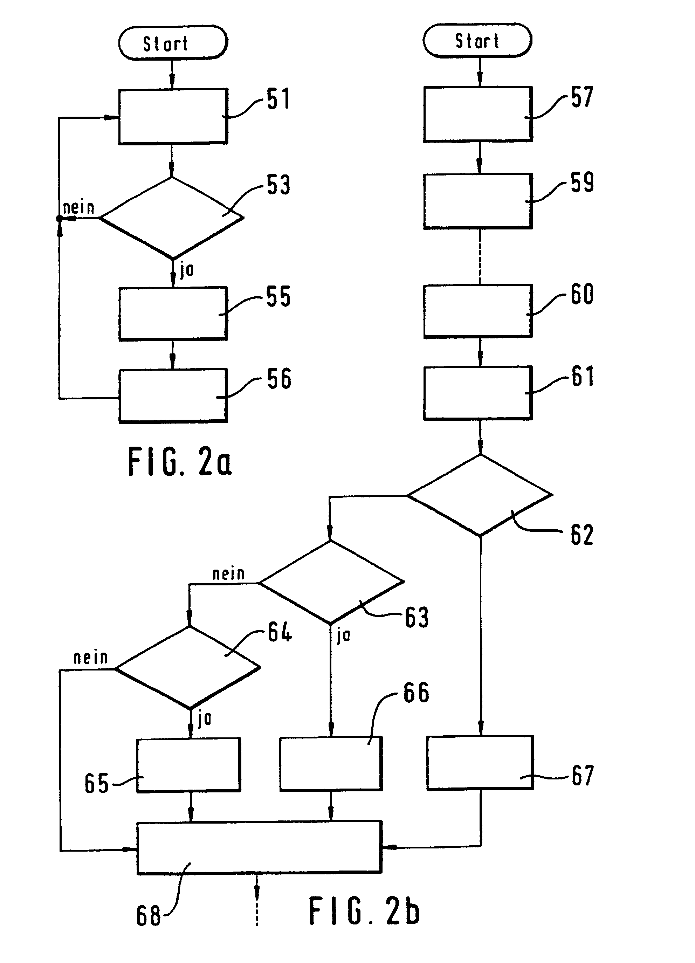

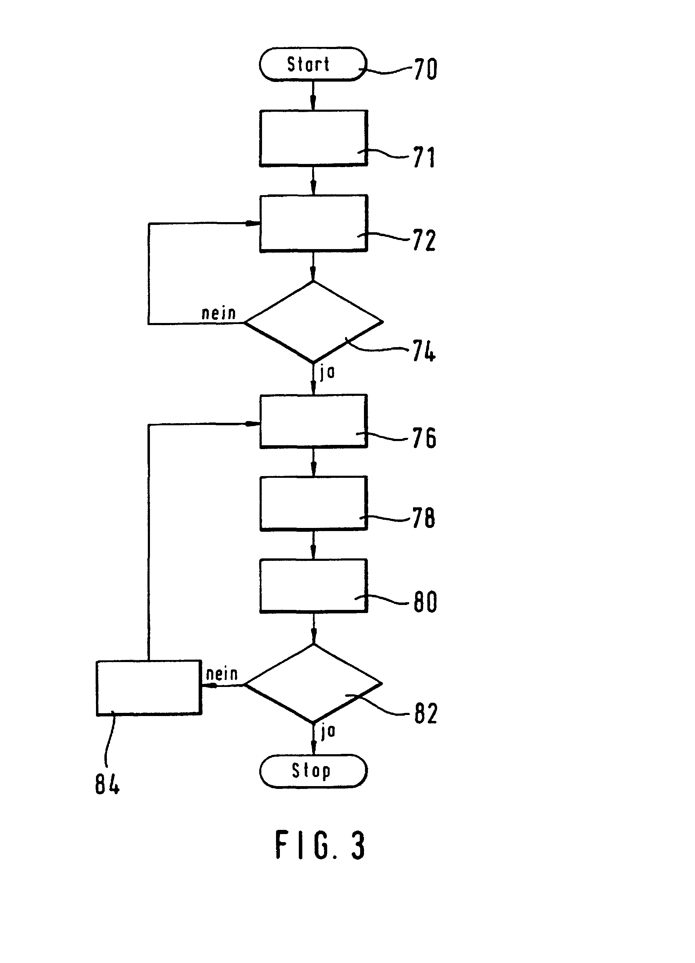

Es zeigen die Figur 1 ein Blockdiagramm einer Vorrichtung, die nach dem erfindungsgemäßen Verfahren arbeitet, Figur 2a und 2b ein Ablaufdiagramm des erfindungsgemäßen Verfahrens, Figur 3 ein Ablaufdiagramm einer Weiterbildung des erfindungsgemäßen Verfahrens nach Fig. 2a und 2b und die Figuren 4a bis 4c Ablaufdiagramme einer zweiten Weiterbildung des erfindungsgemäßen Verfahrens.

### Beschreibung der Ausführungsbeispiele

Das erfindungsgemäße Verfahren ist in der Vorrichtung umgesetzt, die in der Figur 1 dargestellt ist. Eine elektromotorische Antriebseinheit 10 mit einem Elektromotor 12 treibt über ein Getriebe 14 ein Stellteil 16 an. Bei dem Stellteil kann es sich beispielsweise um ein Kraftfahrzeug-Schiebe-Hebe-Dach, ein Kraftfahrzeugfenster, eine Sitzverstellung, eine Spiegelverstellung, eine Lüftungsklappe z.B. in Klimaanlagen handeln oder dergleichen. Der Elektromotor 12 weist eine Motorankerwelle 13 auf, die relativ zum Stator 11 des Elektromotors 12 rotiert. Eine signalverarbeitende Anordnung 20 steuert und/oder regelt den Elektromotor 12 nach Maßgabe von Stellbefehlen, die von einem Bedienelement 22 vorgegeben werden, über eine Treiberschaltung 18. Die Treiberschaltung 18 versorgt den Elektromotor 12 mit Energie und beeinflußt seine Geschwindigkeit durch Änderung der Energiezufuhr, beispielsweise durch Taktung, sowie seine Drehrichtung nach Maßgabe eines von der signalverarbeitenden Anordnung 20 übermittelten Steuersignals 24.

Der Elektromotor 12 weist einen Lagesensor 26 aus einem ersten Teil 28, das auf der Motorankerwelle 13 des Elektromotors 12 drehsteif angeordnet ist, und einem zweiten Teil 30 in Form einer Elektronikplatine auf, die ebenso wie der Stator 11 an einem nicht näher dargestellten Motorgehäuse angeordnet ist.

Das erste Teil 28 ist als Magnetrad ausgebildet, das zwei in unterschiedlichen Richtungen magnetisierte Abschnitte 28a und 28b hat. In den Übergangsbereichen zwischen den magnetisierten Abschnitten 28a und 28b befinden sich Hysteresebereiche 29. Auf der Elektronikplatine 30 als zweitem Teil sind zwei Hall-Sensoren 32 und 34 als Magnetfeldsensoren in einem Winkel von 90° in Umfangsrichtung des Magnetrades 28 angeordnet. Die Hall-Sensoren 32, 34 erzeugen Sensorsignale 36, 38 mit Pegeln abhängig vom Vorzeichen der Komponente des Magnetfeldes in einer Raumrichtung, die durch die Flächennormale von Sensorflächen der Hall-Sensoren 32, 34 vorgegeben ist. Ein Vorzeichenwechsel der Magnetfeldkomponenten in Richtung der Flächennormale findet statt, wenn sich einer der beiden Hysteresebereiche 29 an einem Hallsensor 32, 34 vorbeibewegt. Die Sensorsignale 36, 38 sind über eine Eingangsschnittstelle 39 der signalverarbeitenden Anordnung 20 zugeführt. Beide Hall-Sensoren 32, 34 werden von einer Sensortreiberschaltung 42 über Leitungen 44, 46 mit Energie versorgt. Die signalverarbeitende Anordnung 20 beeinflußt die Sensortreiberschaltung 42 über ein Betriebssignal 48 und vermag die Hall-Sensoren 32, 34 durch Abschaltung ihrer Energiezufuhr außer Betrieb und wieder in Betrieb zu setzen.

Die in der Figur 1 gezeigte Vorrichtung arbeitet nach dem in den Figuren 2a und 2b in Form eines Flußdiagramms dargestellten Verfahren zum Betreiben des Lagesensors 26. In der Figur 2a ist dargestellt, wie der Lagesensor 26 zur Erfassung der Lage des Magnetrades 28 relativ zu der Elektronikplatine 30 und damit zum Stator 11 des Elektromotors 12 betrieben wird: Von der signalverarbeitenden Anordnung werden die Pegel der Sensorsignale 36, 38 über die Eingangsschnittstelle 39 im Schritt 51 des Verfahrens eingelesen. Im Schritt 53 wird von der Eingangsschnittstelle 39 überprüft, ob sich einer der beiden Pegel geändert hat. Dies ist der Fall, wenn sich das Magnetrad 28 relativ zu den Hallsensoren 32, 34 bewegt und ein Vorzeichenwechsel der von dem betroffenen Hallsensor erfaßten Magnetfeldkomponente stattgefunden hat. Dann löst die Eingangsschnittstelle 39 eine Unterbrechung des normalen Programmbetriebs des Mikrocontrollers 21 in der signalverarbeitenden Anordnung 20 (Interrupt) im Schritt 55 aus, indem sie einen H-Pegel an einen IRQ-Eingang des Mikrocontrollers 21 legt. Der Mikrocontroller 21 führt im Schritt 56 ein Unterbrechungs-Unterprogramm aus, bei der ein dem betroffenen Hallsensor 32 oder 34 zugeordneter Zähler von der signalverarbeitenden Anordnung 20 abhängig von der Drehrichtung des Elektromotors 12 inkrementiert oder dekrementiert wird. Nach Beendigung der Auswerteroutine nimmt der Mikrocontroller 21 in der signalverarbeitenden Anordnung 20 den normalen Programmbetrieb an der Stelle wieder auf, an der er zuvor durch das IRQ-Signal unterbrochen wurde. Das Verfahren verzweigt wieder zum Schritt 51.

Die den Hallsensoren 32, 34 zugeordneten Zähler sind als Variablen in einem Speicher 47 der signalverarbeitenden Anordnung 20 realisiert. Der Zählerstand ist normiert auf eine Kalibrierlage des Magnetrades 28, die einem Endanschlag des Stellteils 16 entspricht. Damit repräsentiert der Zählerstand die Lage des Magnetrades 28 zu den gestellfest an der elektromotorischen Antriebseinheit angeordneten Hallsensoren 32, 34, und damit der Motorankerwelle 13 zum Stator 11 des Elektromotors 12. Durch den Lagesensor 26 wird somit die Rotation der Motorankerwelle 12 erfaßt. Ferner wird durch Auswertung der Zähler die Position des Stellteils 16 bestimmt.

Um die Leistungsaufnahme der Antriebseinheit 10 klein zu halten, werden die Hallsensoren ggf. nach Ablauf einer Wartezeit bei Stillstand der Motorankerwelle 12 nach dem in der Fig. 2b dargestellten Verfahren außer Betrieb gesetzt. Im Schritt 57 werden die von den beiden Hallsensoren 32, 34 abgegebenen Pegel über die Eingangsschnittstelle 39 eingelesen und in dem Speicher 47 der signalverarbeitenden Anordnung 20 abgespeichert. Im Schritt 59 wird die Sensortreiberschaltung 42 von der signalverarbeitenden Anordung 20 über das Betriebssignal 48 zum Abschalten der Energieversorgung der Hallsensoren 32 und 34 veranlaßt.

Die Energieversorgung der Hallsensoren 32 und 34 wird im Schritt 60 wieder eingeschaltet, wenn eine Aufweckbedingung erfüllt ist, beispielsweise wenn der Motor wieder in Betrieb genommen werden soll. Im Schritt 61 werden von der signalverarbeitenden Anordnung 20 die von den Hallsensoren 32, 34 nach der Wiederinbetriebnahme abgegebenen Pegel erneut erfaßt und eingelesen. Im Schritt 62 werden jeweils die gespeicherten und die erneut erfaßten Pegel für beide Hallsensoren 32 und 34 miteinander verglichen. Stimmen der erfaßte und der gespeicherte Pegel bei dem Hallsensor 32 und dem Hallsensor 34 nicht überein, verzweigt das Verfahren zum Schritt 67. Da die Segmente 28a und 28b jeweils 180° groß sind, die Hallsensoren 32, 34 jedoch mit einem Winkel von 90° in Umfangsrichtung angeordnet sind, kann dieser Fall nur bei einer Störung auftreten, da sich nicht beide Hallsensoren 32 und 34 gleichzeitig in einem Hysteresebereich 29 des Magnetrades 28 befinden können. Die Störung kann beispielsweise durch eine mechanische Zwangsverstellung während des Außerbetriebsetzens der Hallsensoren 32, 34 verursacht sein; denkbar ist aber auch der Einfluß von Störungen bei der Pegelauswertung. Unabhängig von der Ursache muß in diesem Fall von der Entnormierung der Lagebestimmung ausgegangen werden. Deshalb wird im Schritt 67 eine Kalibrierung der Positionserfassung des Stellteils 16 durch Bewegung an einen nicht näher dargestellten Mikroschalter durchgeführt, der betätigt ist, wenn sich das Stellteil in der Kalibrierposition befindet, und bei dessen Betätigung die Zählerstände der beiden Zähler auf vorgegebene Kalibrierwerte gesetzt werden. Nach Abschluß der Kalibrierung wird im Schritt 68 der normale Betrieb der signalverarbeitenden Anordnung aufgenommen.

Stellt sich bei der Abfrage 62 heraus, daß nicht bei beiden Hallsensoren 32, 34 ein Pegelwechsel stattgefunden hat, wird im Schritt 63 abgefragt, ob sich der vom Hallsensor 32 abgegebene Pegel geändert hat. Falls das der Fall ist, wird der Pegelwechsel im Schritt 66 als gültiger Pegelwechsel gewertet und die bestimmte relative Lage des Magnetrades 28 zu den Hallsensoren 32, 34 korrigiert, indem der dem Hallsensor 32 zugeordnete Zähler abhängig von der Umdrehungsrichtung des Motors vor Außerbetriebsetzen des Hallsensors inkrementiert oder dekrementiert wird. Der Pegelwechsel beruht in diesem Fall mit hoher Wahrscheinlichkeit darauf, daß der betroffene Hall-Sensor 32 einem Hysteresebereich 29 zwischen den beiden magnetischen Abschnitte 28a und 28b des Polrades 28 gegenüberliegt. Nach der Lagekorrektur im Schritt 66 verzweigt das Verfahren auch hier weiter zum Schritt 68.

Stimmen im Schritt 63 die Pegel beim Hallsensor 32 überein, werden im Schritt 64 die Pegel beim Hallsensor 34 miteinander verglichen. Bei Nichtübereinstimmung wird im Schritt 65 der Zählerstand des dem Hallsensor 34 zugeordneten Zählers korrigiert; danach wird zum Schritt 68 verzweigt. Auch in der Abfrage 64 wird zum Schritt 68 verzweigt, wenn der gespeicherte und der erfaßte Pegel des Hallsensors 34 nach Wiederinbetriebnahme übereinstimmen.

Die Zähler des Lagesensors 26 werden, wie oben bereits dargelegt, von der signalverarbeitenden Anordnung 20 zur Bestimmung der Position des Stellteils 16 ausgewertet. Darüber hinaus werden die Pegel der Hall-Sensoren 32, 34 und/oder die ihnen zugeordneten Zählerstände auch zur Bestimmung der Geschwindigkeit, der Beschleunigung, der Drehrichtung des Drehteils und des über das Drehteil übertragenen Drehmomentes ausgewertet. Die bestimmten Werte dieser Größen können beispielsweise zur Realisierung eines Verfahrens, das das Einklemmen eines Gegenstandes oder Körperteils durch das Stellteil 16 erkennt, Verwendung finden.

Über diese Anwendung im Normalbetrieb hinaus kann das erfindungsgemäße Verfahren auch dazu angewendet werden, das Stellteil in exakt definierte Positionen zu bewegen. Die derartig ansteuerbaren Sollpositionen sind dabei durch die Anordnung der Hallsensoren 32, 34 und die Hysteresebereiche 29 des Magnetrades 28 vorgegeben. Als Sollposition wählbar sind diejenigen geometrisch möglichen Konfigurationen, bei denen ein Hysteresebereich 29 sich unmittelbar in der Nähe eines der Hallsensoren 32, 34 befindet; eine dieser Sollpositionen, im folgenden Hysterese-Sollposition genannt, wird also durch Vorgabe eines Hysteresebereichs 29 des Magnetrades 28 und eines der beiden Hallsensoren 32 oder 34 sowie eines Soll-Zählerstandes für den ausgewählten Hallsensors 32 oder 34 für eine Grobpositionierung in die Nähe der Hysterese-Sollposition definiert.

Bei Vorgabe einer dieser Hysterese-Sollpositionen durch das Bedienelement 22 an die signalverarbeitende Anordnung 20 wird zur Bewegung in die Hysterese-Sollposition das in der Figur 3 dargestellte Verfahren ausgeführt. Nach dem Start des Verfahrens im Schritt 70 ermittelt die signalverarbeitende Anordnung im Schritt 71 Soll-Zählerstände der den Hallsensoren 32, 34 zugeordneten Zählern für die vorgegebene Hysterese-Sollposition und veranlaßt, falls die Zählerstände nicht mit den Ist-Zählerständen übereinstimmen, im Schritt 72 eine Bewegung des Elektromotors 12.

Während der Bewegung des Elektromotors wertet die signalverarbeitende Anordnung 20 die Pegel der Hall-Sensoren 32 und 34 wie oben beschrieben zur Erfassung der Position des Stellteils 16 und der Lage des Magnetrades 28 aus. Im folgenden Schritt 74 wird durch die signalverarbeitende Anordnung überprüft, ob die Ist-Zählerstände mit den Soll-Zählerständen übereinstimmen. Die Soll-Zählerstände sind so gewählt, daß der anzusteuernde Hysteresebereich 29 gerade noch nicht im Erfassungsbereich des gewählten Hallsensors 32 oder 34 ist. Stimmen die Soll- und Ist-Zählerstände nicht überein, so wird der Elektromotor 12 im Schritt 72 weiter bewegt, andernfalls werden die Pegel der beiden Hall-Sensoren 32 und 34 im Schritt 76 gespeichert und darauf im Schritt 78 die Hall-Sensoren 32 und 34 außer Betrieb gesetzt. Nach einer vorgebbaren Verzögerungszeit werden die Hallsensoren 32 und 34 im Schritt 80 wieder in Betrieb genommen. Die Verzögerungszeit ist so gewählt, daß Hystereseeffekte der Hallsensoren 32, 34 mit großer Wahrscheinlichkeit eliminiert werden; gegebenenfalls kann auch eine Entmagnetisierung der Hallsensoren 32, 34 vorgesehen sein. Im Schritt 82 werden die Pegel der Hallsensoren 32 und 34 erneut erfaßt und mit den gespeicherten Pegeln verglichen. Falls ein Pegelwechsel bei dem für die Hysterese-Sollposition gewählten Hallsensor 32 oder 34 während der Ruhephase aufgetreten ist und bei dem anderen Hallsensor 34 oder 32 nicht, so ist die Motorankerwelle 13 des Elektromotors 12 so positioniert, daß der Grenzbereich zwischen den beiden magnetischen Abschnitten 28a und 28b genau unter diesem Hallsensor 32 oder 34 zu liegen gekommen ist. Falls kein Pegelwechsel aufgetreten ist, steuert die signalverarbeitende Anordnung 20 den Elektromotor 12 im Schritt 84 für eine sehr kurze Zeit an. Diese Zeit ist so gewählt, daß sich die Motorankerwelle 13 um im Vergleich zur Größe der Hysteresebereiche 29 kleine Schritte bewegt. Danach verzweigt das Verfahren zurück zum Schritt 76. Durch dieses Verfahren ist es also möglich, die Motorankerwelle 13 des Elektromotors 12 und somit das Stellteil 16 in die Hysterese-Sollpositionen mit einer durch die Größe der Hysteresebereiche 29 vorgegebenen Auflösung zu positionieren.

In der in der Figur 1 dargestellten Vorrichtung ist darüber hinaus eine weitere, in den Figuren 4a bis c dargestellte Weiterbildung des erfindungsgemäßen Verfahrens umgesetzt. Die Auswertung der Pegelwechsel der Hallsensoren 32, 34 durch die signalverarbeitende Anordnung 20 erfolgt, wie oben bereits beschrieben, durch einen Interrupt-gesteuerten Programmbetrieb. Das in der Figur 4a dargestellte Verfahren stellt sicher, daß keine Fehlimpulse während eines Außerbetriebsetzens der Hall-Sensorens 32, 34 bei Stillstand der Motorankerwelle 13 und damit des Magnetrades 28 versehentlich als gültige Pegelwechsel gezählt werden. Vor dem Außerbetriebsetzen wird deshalb der in der Figur 4a gezeigte Verfahrensschritt 100 durchlaufen, mit dem eine Kennung 101 im Speicher 47 der signalverarbeitenden Anordnung 20 niedergelegt wird. Anschließend werden die Hall-Sensoren 32, 34 im Schritt 102 über die Sensortreiberschaltung 42 durch Abschalten ihrer Energieversorgung stillgelegt.

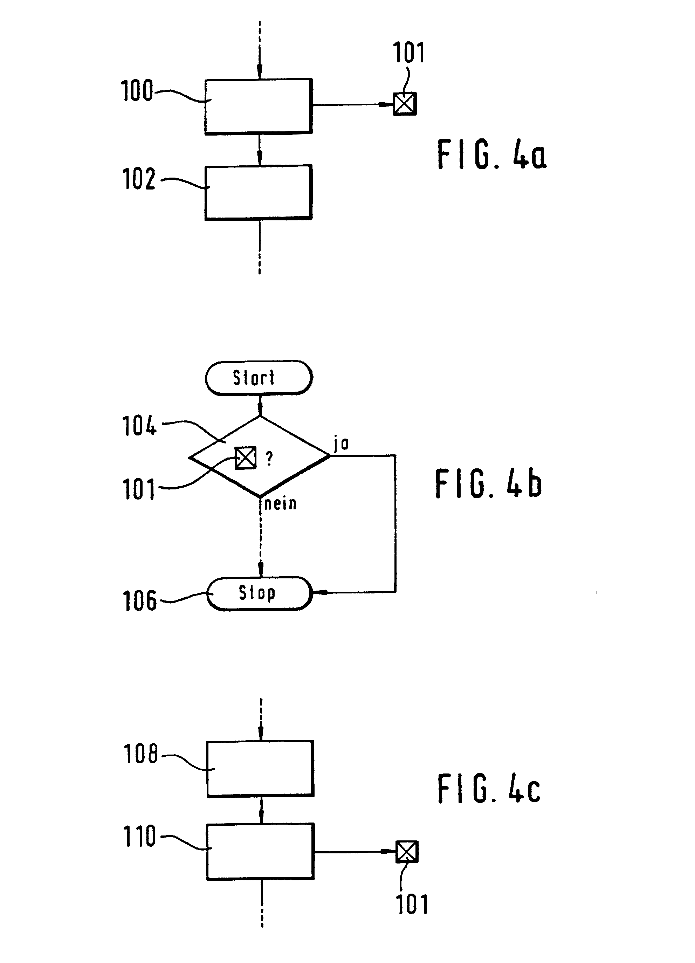

In der Figur 4b ist ein Ausschnitt eines Unterbrechungs-Unterprogramms dargestellt, das vom Mikrocontrollers 21 bei Auslösung einer Unterbrechung (Interrupt) durch die Eingangsschnittstelle 39 beim Eintreffen eines Pegelwechsels ausgeführt wird. Im ersten Schritt 104 nach dem Start des Unterbrechungs-Interruptprogramms wird abgefragt, ob die Kennung 101 gesetzt ist. Nur wenn die Kennung nicht gesetzt ist, wird das Verfahren gänzlich durchlaufen, andernfalls verzweigt das Verfahren sofort zum Ende 106 des Unterbrechungs-Unterprogramms. Dadurch ist sichergestellt, daß Störungen auf den Leitungen zur signalverarbeitenden Anordung 20 oder auch beim Abschalten der Hall-Sensoren 32, 34 auftretende Schwingungen nicht als gültige Pegelwechsel gezählt werden und eine falsche Position des Stellteils 16 durch die signalverarbeitende Anordnung 20 ermittelt wird.

Zur Wiederinbetriebnahme der Hall-Sensoren 32, 34 wird das in der Figur 4c dargestellte Verfahren ausgeführt. Im Schritt 108 werden die Hall-Sensoren 32, 34 wieder mit Spannung versorgt. Erst nach Ablauf einer Zeitspanne vom Einschalten der Spannungsversorgung an, die so gewählt ist, daß die Hallsensoren wieder betriebsbereit ist, wird die Kennung 101 im Schritt 110 rückgesetzt. Erst dann wird auch der Elektromotor 12 wieder betätigt. Bei der nächsten Auslösung eines Interrupts des Mikrocontrollers 21 wird der Pegelwechsel wieder als gültig berücksichtigt.

## Patentansprüche

1. Verfahren zum Betreiben eines Lagesensors (26) aus wenigstens zwei zueinander bewegbaren Teilen (28, 30), dessen erstes Teil (28) wenigstens zwei in unterschiedlichen Richtungen magnetisierte Abschnitte (28a, 28b) und dessen zweites Teil (30, 11) wenigstens einen Magnetfeldsensor (32, 34) aufweist, der das Magnetfeld des ersten Teils (28) erfaßt und in Signale mit zwei Pegeln abhängig vom Vorzeichen der Komponente des Magnetfeldes in einer festgelegten Raumrichtung umwandelt, die einer signalverarbeitenden Anordnung (20) zugeführt werden, von der die Pegel zur Bestimmung der relativen Lage des ersten Teils (28) zum zweiten Teil (30, 11) ausgewertet werden, **dadurch gekennzeichnet, daß** vor einem Außerbetriebsetzen des wenigstens einen Magnetfeldsensors (32, 34) bei Stillstand des ersten Teils (28) relativ zum zweiten Teil (30, 11) der von dem Magnetfeldsensor (32, 34) abgegebene Pegel gespeichert wird, daß bei einem Wiederinbetriebsetzen des Magnetfeldsensors (32, 34) der Pegel erneut erfaßt und mit dem gespeicherten Pegel verglichen wird, und bei Nichtübereinstimmung des gemessenen mit dem gespeicherten Pegel dies als ein gültiger Pegelwechsel gewertet wird.

2. Verfahren nach Anspruch 1, **dadurch gekennzeichnet, daß** die bestimmte relative Lage des ersten (28) zum zweiten Teil (30, 11) entsprechend dem angenommenen gültigen Pegelwechsel korrigiert wird.

3. Verfahren nach einem der Ansprüche 1 oder 2, **dadurch gekennzeichnet, daß** die Wechsel der Pegel erfaßt und bei einem Pegelwechsel ein Zähler abhängig von der Richtung der Bewegung des ersten (28) relativ zum zweiten Teil (30, 11) inkrementiert oder dekrementiert wird.

4. Verfahren nach einem der vorhergehenden Ansprüche, **dadurch gekennzeichnet, daß** zwei Magnetfeldsensoren (32, 34) das Magnetfeld des ersten Teils (28) erfassen und die Pegel beider Magnetfeldsensoren (32, 34) vor dem Außerbetriebsetzen gespeichert werden.

5. Verfahren nach Anspruch 4, **dadurch gekennzeichnet, daß** eine Positionskorrektur vorgenommen wird, wenn bei genau einem der beiden Magnetfeldsensoren (32, 34) ein Pegelwechsel aufgetreten ist.

6. Verfahren nach einem der Ansprüche 4 oder 5, **dadurch gekennzeichnet, daß** die bestimmte relative Lage als ungültig gewertet wird, wenn die Grenzen der sich unter den beiden Magnetfeldsensoren (32, 34) befindenden Abschnitte (28a, 28b) nicht wie die beiden Magnetfeldsensoren (32, 34) beabstandet sind und bei beiden der Magnetfeldsensoren (32, 34) ein Pegelwechsel aufgetreten ist.

7. Verfahren nach einem der vorhergehenden Ansprüche, **dadurch gekennzeichnet, daß** das Magnetfeld von Hallsensoren (32, 34) als Magnetfeldsensoren (32, 34) erfaßt wird und daß die Raumrichtung die durch die Hallsensoren (32, 34) sensierte Magnetfeldrichtung ist.

8. Verfahren nach einem der vorhergehenden Ansprüche, **dadurch gekennzeichnet, daß** eines der beiden Teile (28) relativ zum anderen (30, 11) rotiert.

9. Verfahren nach einem der vorhergehenden Ansprüche, **dadurch gekennzeichnet, daß** der Lagesensor (26) in einer elektromotorischen Motor-Getriebe-Antriebseinheit (10), insbesondere zum Verstellen von Stellteilen (16) in Kraftfahrzeugen wie Fenstern oder Schiebe-Hebe-Dächern, angeordnet ist, daß das erste Teil (28) des Lagesensors (26) als Magnetrad (26) auf der Motorankerwelle (13) drehfest angeordnet ist, daß das zweite Teil (30, 11) des Lagesensors (26) gestellfest am Gehäuse der elektromotorischen Motor-Getriebe-Antriebseinheit (10) angeordnet ist, und daß durch den Lagesensor (26) die Rotation der Motorankerwelle (13) relativ zum Stator (11) des Elektromotors (12) bestimmt wird.

10. Verfahren nach Anspruch 9, **dadurch gekennzeichnet, daß** aus der Rotation der Motorankerwelle (13) relativ zum Stator (11) des Elektromotors (12) die Position des Stellteils (16) bestimmt wird.

11. Verfahren nach einem der vorhergehenden Ansprüche, **dadurch gekennzeichnet, daß** die Pegel zur Bestimmung der Geschwindigkeit und/oder Beschleunigung und/oder der Bewegungsrichtung der Bewegung des ersten (28) und zweiten Teils (30, 11) relativ zueinander und/oder einer über das bewegte Teil (28) übertragenen Kraft ausgewertet werden.

12. Verfahren nach einem der vorhergehenden Ansprüche, **dadurch gekennzeichnet,**
- **daß** die Teile wiederholt im Übergangsbereich (29) der unterschiedlichen magnetisierten Abschnitte (28a, 28b) um im Vergleich zur Größe des Übergangsbereiches (29) kleine Schritte zueinander bewegt werden,
- und **daß** der wenigstens eine Magnetfeldsensor (32, 34) außer Betrieb und nach einer vorgebbaren Zeitspanne wieder in Betrieb gesetzt wird, bis der vor dem Außerbetriebsetzen abgegebene Pegel des wenigstens einen Magnetfeldsensors (32, 34) nicht mehr mit dem nach dem Wiederinbetriebsetzen abgegebenen Pegel übereinstimmt.

13. Verfahren nach einem der vorhergehenden Ansprüche, **dadurch gekennzeichnet, daß** während eines Außerbetriebsetzens des Magnetfeldsensors (32, 34) bei Stillstand des ersten (28) relativ zum zweiten Teil (30, 11) die der signalverarbeitenden Anordnung (20) vom wenigstens einen Magnetfeldsensor (32, 34) zugeführten Pegel als ungültig gewertet werden.

14. Verfahren nach Anspruch 13, **dadurch gekennzeichnet, daß** die signalverarbeitende Anordnung (20) programmgesteuert ist und bei einem Pegelwechsel der normale Programmbetrieb der signalverarbeitenden Anordnung unterbrochen wird (Interrupt), daß der Pegelwechsel durch die signalverarbeitende Anordnung in einem Unterbrechungs-Unterprogramm ausgewertet wird, und daß der normale Programmbetrieb nach Auswertung des Pegelwechsels wieder aufgenommen wird.

15. Verfahren nach Anspruch 14, **dadurch gekennzeichnet, daß** vor dem Außerbetriebsetzen eine Kennung gesetzt wird und die Kennung nach dem Wiederinbetriebsetzen rückgesetzt wird, und daß ein Pegelwechsel bei gesetzter Kennung nicht ausgewertet wird.

16. Verfahren nach einem der Ansprüche 13 bis 15, **dadurch gekennzeichnet, daß** der wenigstens eine Magnetfeldsensor (32, 34) durch Abschalten seiner Energieversorgung (44, 46) außer Betrieb gesetzt wird und durch Einschalten seiner Energieversorgung (44, 46) wieder in Betrieb gesetzt wird, und daß eine Zeitspanne vom Einschalten der Energieversorgung an vorgegeben ist, nach deren Ablauf erfaßte Pegelwechsel als gültig gewertet werden.

17. Verfahren nach Anspruch 16, **dadurch gekennzeichnet, daß** die Zeitspanne so gewählt ist, daß der Magnetfeldsensor nach Ablauf der Zeitspanne wieder betriebsbereit ist.

## Claims

1. Method for operating a position sensor (26) comprising at least two parts (28, 30) that can be moved with respect to one another, whose first part (28) has at least two sections (28a, 28b), which are magnetized in different directions, and whose second part (30, 11) has at least one magnetic field sensor (32, 34), which detects the magnetic field of the first part (28) and converts it into signals having two levels depending on the sign of the component of the magnetic field in a defined spatial direction, which are fed to a signal-processing arrangement (20), which evaluates the levels in order to determine the relative position of the first part (28) with respect to the second part (30, 11), **characterized in that**, prior to a deactivation of the at least one magnetic field sensor (32, 34), with the first part (28) at a standstill relative to the second part (30, 11), the level output by the magnetic field sensor (32, 34) is stored, **in that**, when the magnetic field sensor (32, 34) is reactivated, the level is detected anew and compared with the stored level, and, in the event of the measured level not corresponding to the stored level, this is assessed as a valid level change.

2. Method according to Claim 1, **characterized in that** the specific relative position of the first part (28) with respect to the second part (30, 11) is corrected in accordance with the assumed valid level change.

3. Method according to either of Claims 1 and 2, **characterized in that** the changes in the levels are detected and, in the event of a level change, a counter is incremented or decremented depending on the direction of the movement of the first part (28) relative to the second part (30, 11).

4. Method according to one of the preceding claims, **characterized in that** two magnetic field sensors (32, 34) detect the magnetic field of the first part (28) and the levels of both magnetic field sensors (32, 34) are stored prior to deactivation.

5. Method according to Claim 4, **characterized in that** a position correction is performed if a level change has occurred in the case of exactly one of the two magnetic field sensors (32, 34).

6. Method according to either of Claims 4 and 5, **characterized in that** the specific relative position is assessed as invalid if the boundaries of the sections (28a, 28b) situated below the two magnetic field sensors (32, 34) are not spaced apart like the two magnetic field sensors (32, 34) and a level change has occurred in the case of both of the magnetic field sensors (32, 34).

7. Method according to one of the preceding claims, **characterized in that** the magnetic field is detected by Hall sensors (32, 34) as magnetic field sensors (32, 34), and **in that** the spatial direction is the magnetic field direction sensed by the Hall sensors (32, 34).

8. Method according to one of the preceding claims, **characterized in that** one of the two parts (28) rotates relative to the other part (30, 11).

9. Method according to one of the preceding claims, **characterized in that** the position sensor (26) is arranged in an electromotive motor-gear drive unit (10), in particular for adjusting actuating parts (16) in motor vehicles, such as windows or slide-and-tilt sunroofs, **in that** the first part (28) of the position sensor (26) is arranged as a magnet wheel (26) on the motor armature shaft (13) in a manner fixed against rotation, **in that** the second part (30, 11) of the position sensor (26) is arranged in a rack-fixed manner on the housing of the electromotive motor-gear drive unit (10), and **in that** the rotation of the motor armature shaft (13) relative to the stator (11) of the electric motor (12) is determined by the position sensor (26).

10. Method according to Claim 9, **characterized in that** the position of the actuating part (16) is determined from the rotation of the motor armature shaft (13) relative to the stator (11) of the electric motor (12).

11. Method according to one of the preceding claims, **characterized in that** the levels are evaluated for the purpose of determining the speed and/or acceleration and/or the movement direction of the movement of the first part (28) and second part (30, 11) relative to one another and/or a force transmitted via the moved part (28).

12. Method according to one of the preceding claims, **characterized**
- **in that** the parts are repeatedly moved with respect to one another, in the transition region (29) of the different magnetized sections (28a, 28b), by small steps compared with the size of the transition region (29),
- and **in that** the at least one magnetic field sensor (32, 34) is deactivated and reactivated after a predeterminable period of time until the level - output prior to deactivation - of the at least one magnetic field sensor (32, 34) no longer corresponds to the level output after reactivation.

13. Method according to one of the preceding claims, **characterized in that**, during a deactivation of the magnetic field sensor (32, 34), with the first part (28) at a standstill relative to the second part (30, 11), the levels fed to the signal-processing arrangement (20) from the at least one magnetic field sensor (32, 34) are assessed as invalid.

14. Method according to Claim 13, **characterized in that** the signal-processing arrangement (20) is program-controlled and the normal program operation of the signal-processing arrangement is interrupted (interrupt) in the event of a level change, **in that** the level change is evaluated by the signal-processing arrangement in an interrupt subroutine, and **in that** the normal program operation is resumed after evaluation of the level change.

15. Method according to Claim 14, **characterized in that** an identifier is set prior to deactivation and the identifier is reset after reactivation, and **in that** a level change is not evaluated with the identifier set.

16. Method according to one of Claims 13 to 15, **characterized in that** the at least one magnetic field sensor (32, 34) is deactivated by switching off its energy supply (44, 46) and is reactivated by switching on its energy supply (44, 46), and **in that** a period of time starting from the switching-on of the energy supply is prescribed, level changes detected after said period of time has elapsed being assessed as valid.

17. Method according to Claim 16, **characterized in that** the period of time is chosen such that the magnetic field sensor is ready for operation again after the period of time has elapsed.

## Revendications

1. Procédé de mise en oeuvre d'un capteur de position (26) formé d'au moins deux pièces (28, 30) mobiles l'un par rapport à l'autre, la première pièce (28) ayant au moins deux segments (28a, 28b) aimantés dans des directions différentes et la seconde pièce (30, 11) ayant au moins un capteur de champ magnétique (32, 34) détectant le champ magnétique de la première pièce (28) pour le convertir en signaux à deux niveaux suivant le signal algébrique de la composante de champ magnétique dans une direction fixe de l'espace, signaux amenés à un dispositif de traitement de signal (20) qui exploite les niveaux pour déterminer la position relative de la première pièce (28) par rapport à la seconde pièce (30, 11),
**caractérisé en ce qu'**
avant la mise hors service d'au moins un capteur de champ magnétique (32, 34) à l'arrêt de la première pièce (28) par rapport à la seconde pièce (30, 11) on enregistre le niveau émis par le capteur de champ magnétique (32, 34), et lors de la remise en route du capteur de champ magnétique (32, 34) on saisit de nouveau le niveau et on le compare au niveau enregistré en mémoire, et en cas de non concordance entre le niveau mesuré et le niveau en mémoire on considère que le changement de niveau est valable.

2. Procédé selon la revendication 1,
**caractérisé en ce qu'**
on corrige la position relative déterminée de la première pièce (28) par rapport à la seconde pièce (30, 11) suivant le changement de niveau considéré comme valable.

3. Procédé selon l'une des revendications 1 ou 2,
**caractérisé en ce qu'**on
on saisit le changement de niveau et en cas de changement de niveau on incrémente ou on décrémente un compteur suivant le sens du mouvement de la première pièce (28) par rapport à la seconde pièce (30, 11).

4. Procédé selon l'une des revendications précédentes,
**caractérisé en ce que**
deux capteurs de champ magnétique (32, 34) détectent le champ magnétique de la première pièce (28) et les niveaux des deux capteurs de champ magnétique (32, 34) sont enregistrés en mémoire avant la mise hors service.

5. Procédé selon la revendication 4,
**caractérisé en ce qu'**
on effectue une première correction de position si de manière précise pour l'un des capteurs de champ magnétique (32, 34) il y a eu un changement de niveau.

6. Procédé selon l'une des revendications 4 ou 5,
**caractérisé en ce qu'**
on exploite une position relative déterminée comme non valable si les limites des segments (28a, 28b) qui se trouvent sous les deux capteurs de champ magnétique (32, 34) ne sont pas distantes comme les deux capteurs de champ magnétique (32, 34) et lorsqu'il y a eu un changement de niveau pour les deux capteurs de champ magnétique (32,34).

7. Procédé selon l'une des revendications précédentes,
**caractérisé en ce que**
le champ magnétique est saisi par les capteurs Hall (32, 34) fonctionnant comme des capteurs de champ magnétique (32, 34) et la direction de l'espace est la direction du champ magnétique détecté par les capteurs Hall (32, 34).

8. Procédé selon l'une des revendications précédentes,
**caractérisé en ce que**
l'une des deux pièces (28) tourne par rapport à l'autre (30, 11).

9. Procédé selon l'une des revendications précédentes,
**caractérisé en ce que**
le capteur de position (26) est associé à une unité d'entraînement de moteur électrique - transmission (10) notamment pour positionner des pièces réglables (16) dans des véhicules telles que des vitres ou des toits ouvrants, la première pièce (28) du capteur de position (26) est une roue magnétique (26) solidaire en rotation de l'arbre de l'induit (13) du moteur,
la seconde pièce (30, 11) du capteur de position (26) est fixe par rapport au boîtier de l'unité d'entraînement moteur électrique - transmission (10), et
le capteur de position (26) détermine la rotation de l'arbre d'induit (13) par rapport au stator (11) du moteur électrique (12).

10. Procédé selon la revendication 9,
**caractérisé en ce qu'**
à partir de l'arbre d'induit (13) par rapport au stator (11) du moteur électrique (12) on détermine la position de la pièce actionnée (16).

11. Procédé selon l'une des revendications précédentes,
**caractérisé en ce qu'**
on exploite le niveau pour déterminer la vitesse et/ou l'accélération et/ou le sens de déplacement du mouvement de la première pièce (28) et de la seconde pièce (30, 11) l'une par rapport à l'autre et/ou de la force transmise par la pièce mobile (28).

12. Procédé selon l'une des revendications précédentes,
**caractérisé en ce qu'**
- on déplace de manière répétée les pièces dans la plage transitoire (29) des segments (28a, 28b) d'aimantation différente pour leur faire effectuer des petits pas par comparaison à la dimension de la plage transitoire (29), et
- on met hors service au moins un capteur de champ magnétique (32, 34) et après une durée prédéterminée on le remet en service, jusqu'à ce que le niveau émis avant la mise hors service au moins de ce capteur de champ magnétique (32, 34) ne correspond plus au niveau émis après la remise en service.

13. Procédé selon l'une des revendications précédentes,
**caractérisée en ce que**
pendant la mise hors service du capteur de champ magnétique (32, 34) à l'arrêt de la première pièce (28) par rapport à la seconde pièce (30, 11), on exploite comme non valable les niveaux fournis au dispositif de traitement de signal (20) par au moins un capteur de champ magnétique (32, 34).

14. Procédé selon la revendication 13,
**caractérisé en ce que**
le dispositif de traitement de signal (20) est commandé par programme et en cas de changement de niveau, le déroulement du programme normal par le dispositif de traitement de signal est interrompu, le changement de niveau est exploité par le dispositif de traitement de signal dans un sous programme d'interruption, et on reprend le fonctionnement suivant le programme normal après l'exploitation du changement de niveau.

15. Procédé selon la revendication 14,
**caractérisé en ce qu'**
avant la mise hors service on place une référence et on annule de nouveau cette référence après la remise en service, et le changement de niveau n'est pas exploité lorsque la référence est mise.

16. Procédé selon l'une des revendications 13 à 15,
**caractérisé en ce qu'**
on met en hors service au moins un capteur de champ magnétique (32, 34) par la coupure de son alimentation (44, 46) et on le remet de nouveau en service par le branchement de son alimentation (44, 46), et à partir du branchement de l'alimentation, on prévoit une durée après laquelle le changement de niveau détecté est exploité comme valable.

17. Procédé selon la revendication 16,
**caractérisé en ce que**
la durée est choisie pour que le capteur magnétique soit de nouveau prêt à fonctionner à la fin de cette durée.
